# EUROPEAN PATENT APPLICATION

(11) **EP 4 781 877 A1**
(43) Date of publication of application: **29.07.2026**
(21) Application number: 25801845.6
(22) Date of filing: 06.01.2025
(51) Int. Cl.: A47J 37/06

(54) **WOOD CHIP COMBUSTION FURNACE**

(30) Priority: 29.11.2024 CN 202422952224 U; 29.11.2024 CN 202422952251 U; 29.11.2024 CN 202422959369 U
(71) Applicant: Haohong Electric Technology (Hubei) Co., Ltd., Huanggang, Hubei 438000 (CN)
(72) Inventor: WANG, Min, Huanggang, Hubei 438000 (CN)
(74) Representative: Osterhoff, Utz
(86) International application number: PCT/CN2025/070781
(87) International publication number: WO 2026/113122

(57) **Abstract**

The present application relates to the technical field of combustion furnaces, and particularly relates to a wood chip combustion furnace. The wood chip combustion furnace includes a combustion furnace body with a combustion chamber and a feeding mechanism connected to the combustion furnace body. The feeding mechanism is provided with a feeding pipe and a stirring rod, the feeding channel of the feeding pipe is in communication with the combustion chamber, the stirring rod is rotatably provided in the feeding channel of the feeding pipe, the outer circumferential surface of the stirring rod is convexly provided with a stirring part, and the stirring part extends along the axial direction of the stirring rod.

## Description

### CROSS-REFERENCE TO RELATED APPLICATIONS

This application claims priority to Chinese Patent Application No. 202422952251.1, Chinese Patent Application No. 202422952224.4, and Chinese Patent Application No. 202422959369.7, filed on November 29, 2024. All of the aforementioned applications are incorporated herein by reference in their entireties.

### TECHNICAL FIELD

The present application relates to the technical field of combustion furnace, and in particular to a wood chip combustion furnace.

### BACKGROUND

The most prominent feature of a barbecue furnace is that it can grill and fry food at the same time, or can be used for only one of these functions independently. It has an exquisite design and is easy to install. As a popular style in Europe and America, it is suitable for outdoor or family gatherings with many people. A barbecue furnace is also called a roasting furnace or a charcoal roasting furnace. Its working principle is to use the heat generated by the combustion of charcoal or environmentally friendly charcoal to heat food through air convection.

In the related art, most barbecue furnaces use combustion particles with small particle diameters as the fire source. Due to the space volume limitation of the feeding pipe, when using larger-volume wood chip fuel or other fuels, the problem of material clogging is likely to occur.

### SUMMARY

The main purpose of the present application is to propose a wood chip combustion furnace, aiming to solve the problem of material clogging when using wood chip fuel with large diameters.

To achieve the above purpose, the wood chip combustion furnace includes a combustion furnace body provided with a combustion chamber and a feeding mechanism connected to the combustion furnace body; the feeding mechanism is provided with a feeding pipe and a stirring rod, the feeding channel of the feeding pipe is in communication with the combustion chamber, the stirring rod is rotatably provided in the feeding channel of the feeding pipe, the outer circumferential surface of the stirring rod is convexly provided with a stirring part, and the stirring part extends along the axial direction of the stirring rod.

In an embodiment of the present application, the stirring part is a spiral convex part.

In an embodiment of the present application, a stirring passage is provided between the end of the stirring part in the radial direction of the stirring rod and the inner wall of the feeding pipe.

In an embodiment of the present application, the feeding mechanism further includes a feeding motor, the feeding motor is fixed at the end of the feeding pipe away from the combustion furnace body, and the stirring rod is connected to the rotating output shaft of the feeding motor.

In an embodiment of the present application, the feeding mechanism further includes a feeding hopper, and the feeding hopper is fixedly connected to the outer side wall of the combustion furnace body; the feeding hopper has a feeding port and a discharging port communicating with the feeding port, and the discharging port is in communication with the feeding channel of the feeding pipe.

In an embodiment of the present application, the feeding mechanism further includes a discharging assembly, and the discharging assembly includes a discharging hopper and a discharging baffle; the feeding port of the discharging hopper is in communication with the material-passing channel of the feeding hopper, and the discharging baffle is slidably provided at the feeding port of the discharging hopper.

In an embodiment of the present application, the feeding mechanism further includes a buffer screen and a material-vibrating assembly, and the buffer screen is provided at the end of the feeding hopper close to the feeding port; the material-vibrating assembly includes a stirring motor fixedly connected to the feeding hopper and a material-vibrating rod connected to the output end of the stirring motor, and the vibrating end of the material-vibrating rod is provided between the buffer screen and the discharging port.

In an embodiment of the present application, the combustion furnace body is provided with a fire pot in the combustion chamber, and the combustion space of the fire pot is in communication with the feeding channel of the feeding pipe; the outer circumferential wall of the fire pot is provided with a plurality of air dampers, and each air damper is provided at intervals along the outer circumferential wall of the fire pot.

In an embodiment of the present application, the wood chip combustion furnace is further provided with a control panel configured to control the combustion temperature of the combustion chamber.

In an embodiment of the present application, the combustion furnace body is further provided with a heat preservation chamber and a side platform extension, the heat preservation chamber is provided at the lower part of the combustion chamber; the side platform extension is provided on the side of the combustion furnace body opposite to the feeding mechanism.

In the technical solution of the present application, the wood chip combustion furnace can use not only combustion particles with small particle diameters but also wood chip fuel with large diameters. Specifically, after the wood chip fuel is fed into the feeding pipe, the stirring rod can rotate synchronously. During the rotation of the stirring rod, the convex stirring part of the stirring rod can stir the wood chip fuel, thereby preventing the wood chip fuel from being blocked in the feeding pipe and avoiding the problem of material clogging; at the same time, the stirring part is provided to extend along the axial direction of the stirring rod, which can push the wood chip fuel to move toward the combustion chamber, further preventing the problem of material clogging, thus ensuring the heating efficiency.

### BRIEF DESCRIPTION OF THE DRAWINGS

To more clearly illustrate the technical solutions in the embodiments of the present application or in the related art, the drawings required for describing the embodiments or the related art will be briefly introduced below. Obviously, the drawings described below are only some embodiments of the present application. For those of ordinary skill in the art, other drawings can also be obtained according to the structures shown in these drawings without making creative efforts.
FIG. 1 is a three-dimensional schematic diagram of a wood chip combustion furnace according to an embodiment of the present application.
FIG. 2 is a cross-sectional view along line A-A in FIG. 1.
FIG. 3 is a three-dimensional schematic diagram of a partial structure of the wood chip combustion furnace according to another embodiment of the present application.
FIG. 4 is a three-dimensional schematic diagram of a feeding mechanism and fire pot according to an embodiment of the present application.
FIG. 5 is a cross-sectional view along line B-B in FIG. 4.
FIG. 6 is a three-dimensional schematic diagram of the wood chip combustion furnace according to another embodiment of the present application.
FIG. 7 is a three-dimensional schematic diagram of the control panel according to an embodiment of the present application.
FIG. 8 is a schematic diagram of the communication relationship of the wood chip combustion furnace according to an embodiment of the present application.
FIG. 9 is a schematic diagram of a partial structure of FIG. 6.
FIG. 10 is a front view of FIG. 2.
FIG. 11 is a cross-sectional view along line A-A in FIG. 10.
FIG. 12 is an exploded schematic diagram of a partial structure of FIG. 9.
FIG. 13 is an enlarged schematic diagram of the structure at position B in FIG. 12.
FIG. 14 is a three-dimensional schematic diagram of a side furnace cooker according to an embodiment of the present application.

### Description of reference signs:

10, combustion furnace body; 101, fire pot; 101a, air damper; 10a, combustion chamber; 20, feeding mechanism; 201, feeding pipe; 201a, material-passing pipe; 202, stirring rod; 202a, pushing rod; 203, stirring part; 203a, feeding motor; 20a, stirring passage; 204, feeding motor; 205, feeding hopper; 206, discharging hopper; 207, discharging baffle; 208, buffer screen; 209, stirring motor; 210, vibrating rod; 30, control panel; 31, controller; 311, temperature detection unit; 312, temperature preset unit; 313, timing unit; 314, time-keeping unit; 32, display module; 33, first control button; 34, switching button; 35, food temperature detection probe; 36, wireless probe; 37, feeding start-stop button; 38, second control button; 40, heat preservation chamber; 50, side platform extension; 51, second combustion chamber; 52, gas storage chamber; 53, ignition device; 54, heat equalizing plate; 55, second cover body; 56, side furnace cooker; 561, bearing part; 562, support leg; 5621, first support section; 5622, second support section; 50a, combustion space; 50b, roasting space; 50b1, first insertion hole; 50b2, second insertion hole; 57, diffusion screen; 58, ejector tube; 60, heat preservation box; 61, heat preservation screen; 62, heating tube.

The realization of the objectives, functional features and advantages of the present application will be further described in combination with the embodiments and with reference to the accompanying drawings.

### DETAILED DESCRIPTION OF THE EMBODIMENTS

The technical solutions in the embodiments of the present application will be clearly and completely described below with reference to the accompanying drawings in the embodiments of the present application. Obviously, the described embodiments are only a part of the embodiments of the present application, rather than all the embodiments. Based on the embodiments in the present application, all other embodiments obtained by those of ordinary skill in the art without creative labor shall fall within the protection scope of the present application.

It should be noted that if there are directional indications (such as up, down, left, right, front, back, ...) involved in the embodiments of the present application, the directional indications are only used to explain the relative positional relationships and movement states of various components under a specific posture. If the specific posture changes, the directional indications will also change accordingly.

In addition, if there are descriptions involving "first", "second", etc. in the embodiments of the present application, such descriptions of "first" and "second" are only for descriptive purposes, and cannot be understood as indicating or implying their relative importance or implicitly indicating the number of indicated technical features. Therefore, the features defined with "first" and "second" may explicitly or implicitly include at least one such feature. In addition, if "and/or" or "and/or" appears throughout the text, its meaning includes three parallel solutions. Taking "A and/or B" as an example, it includes the A solution, the B solution, or a solution where both A and B are satisfied. In addition, the technical solutions between the various embodiments can be combined with each other, but it must be based on the realization by those of ordinary skill in the art. When the combination of technical solutions is contradictory or cannot be realized, it should be considered that such a combination of technical solutions does not exist and is not within the protection scope required by the present application.

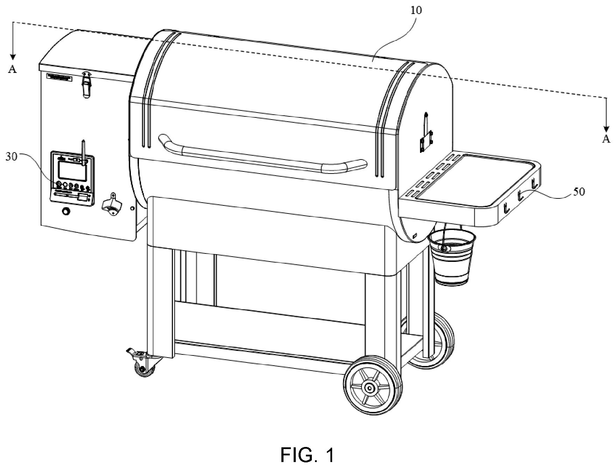

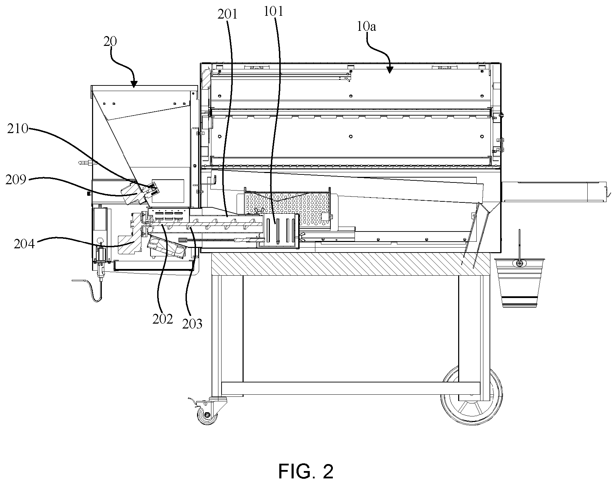

As shown in FIG. 1 and FIG.2, the present application provides a wood chip combustion furnace, including a combustion furnace body 10 with a combustion chamber 10a and a feeding mechanism 20 connected to the combustion furnace body 10. The feeding mechanism 20 is provided with a feeding pipe 201 and a stirring rod 202, the feeding channel of the feeding pipe 201 is in communication with the combustion chamber 10a, the stirring rod 202 is rotatably provided in the feeding channel of the feeding pipe 201, the outer circumferential surface of the stirring rod 202 is convexly provided with a stirring part 203, and the stirring part 203 extends along the axial direction of the stirring rod 202.

In the technical solution of the present application, the wood chip combustion furnace can use not only combustion particles with small particle diameters but also wood chip fuel with large diameters. Specifically, after the wood chip fuel is fed into the feeding pipe 201, the stirring rod 202 can rotate synchronously. During the rotation of the stirring rod 202, the convex stirring part 203 of the stirring rod 202 can stir the wood chip fuel, thereby preventing the wood chip fuel from being blocked in the feeding pipe 201 and avoiding the problem of material clogging; at the same time, the stirring part 203 is provided to extend along the axial direction of the stirring rod 202, which can push the wood chip fuel to move toward the combustion chamber 10a, further preventing the problem of material clogging, thus ensuring the heating efficiency.

The wood chip combustion furnace can be used indoors or outdoors for food roasting or baking. The combustion furnace body 10 includes a furnace body and a cover body. The cover body is hinged to the furnace body and can enclose to form a combustion chamber 10a. During the process of heating food by the wood chip combustion furnace, the cover body is tightly closed to the furnace body to make the combustion chamber 10a form a sealed space, thereby avoiding heat loss; specifically, a roasting net or a baking tray is provided in the combustion chamber 10a. Meanwhile, the roasting net or baking tray can be screwed or plugged into screw holes or fixing parts at different heights, so as to change the height of the roasting net or baking tray in the combustion chamber 10a, so as to provide a suitable space for heating different food materials. In the combustion chamber 10a, there is an area where combustion medium burns, and the roasting net or baking tray has a certain distance from the combustion area. In this distance space, structures such as an oil receiving pan and a heat conducting plate can be placed to prevent dust from rising, collect heat, receive oil, etc.; the heat generated by the combustion medium circulates in the combustion chamber 10a, thereby heating the food in the entire combustion chamber 10a. During the heating process, heat will flow to the outside through the furnace body and the cover body.

In order to supplement the heat of the combustion chamber 10a, a feeding mechanism 20 is provided on one side of the combustion furnace body 10. The feeding mechanism 20 is responsible for conveying solid combustion media such as wood chips into the combustion chamber 10a. Among them, in order to prevent the solid combustion medium from clogging during transportation, the feeding mechanism is provided with a feeding pipe 201 and a stirring rod 202. The feeding channel of the feeding pipe 201 is in communication with the combustion chamber 10a. The stirring rod 202 is rotatably provided in the feeding channel of the feeding pipe 201. The outer circumferential surface of the stirring rod 202 is convexly provided with a stirring part 203, and the stirring part 203 is provided to extend along the axial direction of the stirring rod 202. In this way, during the process that the solid combustion medium enters the combustion chamber 10a along the feeding channel, the stirring rod 202 that rotates continuously links the stirring part 203 to push the solid combustion medium to move toward the combustion chamber 10a. Specifically, the stirring part 203 is wavy, which can generate pushing and pulling forces on the solid combustion medium when rotating, helping the solid combustion medium to enter the combustion chamber 10a smoothly; in another embodiment, the stirring part 203 can be composed of a series of cylindrical protrusions, so that the stirring part 203 generates friction and pushing forces on the solid combustion medium when rotating. As mentioned above, the stirring part 203 is provided to extend along the axial direction of the stirring rod 202. In this way, the stirring part 203 can provide uniform stirring force over the entire length of the stirring rod 202, ensuring that wood chips or other materials are evenly distributed during transportation, avoiding accumulation or gaps, and during transportation, the stirring effect can continuously act on the solid combustion medium to keep the solid combustion medium flowing, effectively preventing the solid combustion medium from clogging in the stirring rod 202. The stirring rod 202 can be driven manually or by a motor, which is not limited here.

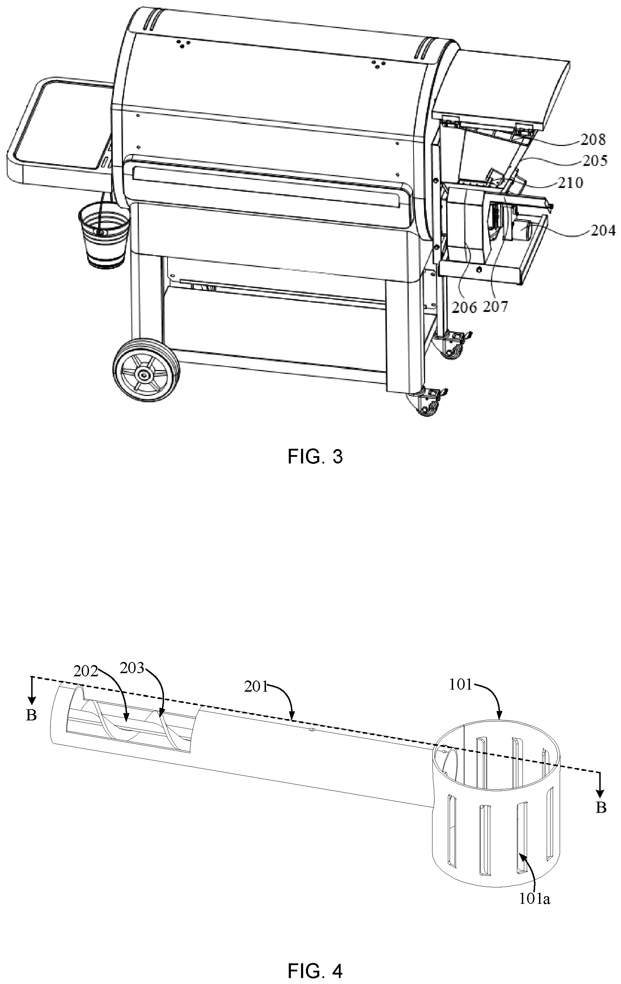

In an embodiment of the present application, as shown in FIG. 2 and FIG. 4, the stirring part 203 is a spiral convex part.

In this embodiment, the stirring part 203 and the stirring rod 202 are of an integrated structure to prevent falling off; specifically, the stirring part 203 is set as a spiral convex part. The spiral convex stirring part 203 can provide continuous rotational force during the stirring process, so that the solid combustion medium is continuously subjected to force during the stirring process, thereby maintaining continuous stirring and forward movement effects, and at the same time helping the solid combustion medium to be evenly distributed during the stirring process, reducing the accumulation and gaps of the solid combustion medium around the stirring rod 202, ensuring the uniformity of the solid combustion medium dispersion, thereby avoiding the problem of material clogging. In one embodiment, to explain the anti-clogging effect of the spiral convex stirring part 203, the spiral direction of the stirring part 203 is defined as the first direction. At this time, the forward rotation of the stirring rod 202 can push the solid combustion medium forward. When a clogging problem occurs, reversing the stirring rod 202 can drive the solid combustion medium to retreat, thereby solving the clogging problem. How to determine that the wood chip combustion furnace has a solid combustion medium clogging problem will be explained later.

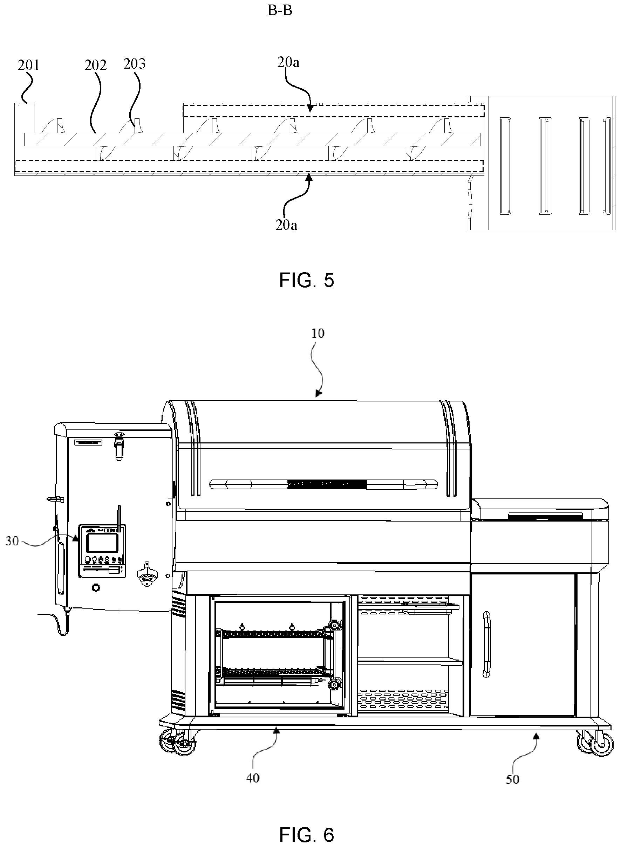

In an embodiment of the present application, as shown in FIG. 4 and FIG. 5, a stirring passage 20a is provided between the end of the stirring part 203 in the radial direction of the stirring rod 202 and the inner wall of the feeding pipe 201.

In this embodiment, the radial direction of the stirring rod 202 is the diameter direction of the stirring rod, and the stirring part 203 protrudes from the outer surface of the stirring rod 202 along this direction. In order to prevent the solid combustion medium with a large volume from being clamped between the end of the stirring part 203 and the inner wall of the feeding pipe 201 during movement, a stirring passage 20a is formed between the end of the stirring part 203 and the inner wall of the feeding pipe 201. In this way, during the movement of the solid combustion medium, the feeding pipe 201 has sufficient space for the solid combustion medium to move. In one embodiment, to explain the advantages of the spiral convex stirring part 203 matched with the stirring passage 20a, it is defined that the central axis of the stirring rod 202 is divided into any number of points along the axial direction length direction. After the stirring part 203 is set as a spiral convex part, there is only one stirring part 203 on both sides of each point along the radial direction, so that the space of the stirring passage 20a is expanded, and the fluidity of the solid combustion medium in the feeding pipe 201 is enhanced.

In an embodiment of the present application, as shown in FIG. 3, the feeding mechanism 20 further includes a feeding motor 204. The feeding motor 204 is fixed at the end of the feeding pipe 201 away from the combustion furnace body 10, and the stirring rod 202 is connected to the rotating output shaft of the feeding motor 204.

In this embodiment, the feeding motor 204 is fixed at the end of the feeding pipe 201 away from the combustion furnace body 10, which can reduce the impact of heat on the electrical performance of the motor and prolong the service life of the feeding motor 204; the stirring rod 202 is driven to rotate by the feeding motor 204, which avoids the danger of manual rotation. Moreover, by setting the output parameters of the feeding motor 204, the stirring rod 202 can rotate at a constant speed, and an electronic control system can be further set to control the start and stop of the feeding motor 204 in real time.

In an embodiment of the present application, as shown in FIG. 3, the feeding mechanism 20 further includes a feeding hopper 205. The feeding hopper 205 is fixedly connected to the outer side wall of the combustion furnace body 10; the feeding hopper 205 has a feeding port and a discharging port communicating with the feeding port, and the discharging port is communicating with the feeding channel of the feeding pipe 201.

In this embodiment, the discharging port at the lower end of the feeding hopper 205 is connected to the feeding channel of the feeding pipe 201, so as to realize the directional feeding function. At the same time, the feeding hopper 205 provides a convenient feeding port, so that the operator can easily add wood chips or other solid combustion media into the combustion furnace, and the feeding hopper 205 can temporarily store a certain amount of fuel, so that even if feeding is stopped for a short time during continuous combustion, the combustion process will not be affected. In one embodiment, the feeding hopper 205 is hinged with a hopper cover to cover the feeding port of the feeding hopper 205, avoiding rapid heat loss and ensuring the cleanliness of the hopper.

In an embodiment of the present application, as shown in FIG. 3, the feeding mechanism 20 further includes a discharging assembly, and the discharging assembly includes a discharging hopper 206 and a discharging baffle 207; the feeding port of the discharging hopper 206 is in communication with the material-passing channel of the feeding hopper 205, and the discharging baffle 207 is slidably provided at the feeding port of the discharging hopper 206.

In this embodiment, the discharging hopper 206 is provided on the side of the feeding hopper 205, the feeding port of the discharging hopper 206 is connected to the material-passing channel of the feeding hopper 205, and the discharging baffle 207 is slidably provided at the feeding port of the discharging hopper 206. In this way, when the feeding hopper 205 is blocked during feeding, the discharging baffle 207 is moved to connect the discharging hopper 206 with the feeding hopper 205, providing an additional bypass channel for the feeding hopper 205 to quickly clear the blockage, thereby ensuring the normal supply of fuel. At the same time, the discharging baffle 207 is moved to quickly take out the unburned remaining fuel; in order to realize the sliding of the discharging baffle 207, a chute structure is designed at the feeding port of the discharging hopper 206, or a chute structure is formed between the discharging hopper 206 and the feeding hopper 205, and the discharging baffle 207 is located in the chute structure, so that the discharging baffle 207 can be pushed to move.

In an embodiment of the present application, as shown in FIG. 3, the feeding mechanism 20 further includes a buffer screen 208 and a material-vibrating assembly. The buffer screen 208 is provided at one end of the feeding hopper 205 close to the feeding port; the material-vibrating assembly includes a stirring motor 209 fixedly connected to the feeding hopper 205 and a material-vibrating rod 210 connected to the output end of the stirring motor 209, and the vibrating end of the material-vibrating rod 210 is located between the buffer screen 208 and the discharging port.

In this embodiment, in order to avoid the solid combustion medium directly impacting the feeding hopper 205 during feeding, the buffer screen 208 is provided at one end of the feeding hopper 205 close to the feeding port. In this way, the solid combustion medium first falls on the buffer screen 208, and after the buffering effect of the buffer screen 208, it falls into the feeding hopper 205 at a slow speed. At the same time, from a safety perspective, the buffer screen 208 can prevent human hands from reaching in, improving safety performance. In one embodiment, in order to prevent the solid combustion medium that has been buffered and decelerated from clogging in the feeding hopper 205, a material-vibrating assembly is provided between the buffer screen 208 and the discharging port of the feeding hopper 205. The material-vibrating assembly includes a stirring motor 209 fixedly connected to the feeding hopper 205 and a material-vibrating rod 210 connected to the output end of the stirring motor 209. In this way, during feeding, the stirring motor 209 drives the material-vibrating rod 210 to vibrate, thereby avoiding the concentration of the solid combustion medium in the feeding hopper 205 and thus blocking the discharging port.

In an embodiment of the present application, as shown in FIG. 2, FIG. 4 and FIG. 5, the combustion furnace body 10 is provided with a fire pot 101 in the combustion chamber 10a, and the combustion space of the fire pot 101 is in communication with the feeding channel of the feeding pipe 201; the outer circumferential wall of the fire pot 101 is provided with a plurality of air dampers 101a, and each air damper 101a is provided at intervals along the outer circumferential wall of the fire pot 101.

In this embodiment, the fire pot 101 serves as the combustion area of the combustion chamber 10a. The fire pot 101 is fixed in the sheet metal part in the combustion chamber 10a through a disc-shaped screw. In this way, after roasting a batch of food, the disc-shaped screw can be turned to remove the fire pot 101, thereby taking out the combustion ash in the fire pot 101 for ash cleaning; the side wall of the fire pot 101 is provided with a butt hole, and the discharging end of the feeding pipe 201 is fixedly connected to the butt hole of the fire pot 101, so that the combustion space of the fire pot 101 is connected to the feeding channel of the feeding pipe 201. In one embodiment, in order to improve the combustion efficiency of the solid combustion medium, the outer circumferential wall of the fire pot 101 is provided with a plurality of air dampers 101a, and each air damper 101a is provided at intervals along the outer circumferential wall of the fire pot 101. By setting the air dampers 101a, the combustion space of the fire pot 101 can be connected to the air supply channel of the wood chip combustion furnace to enhance gas fluidity and improve combustion efficiency.

In an embodiment of the present application, as shown in FIG. 1, the wood chip combustion furnace is further provided with a control panel 30, and the control panel 30 is configured to control the combustion temperature of the combustion chamber 10a.

In this embodiment, the control panel 30 includes a display module, a temperature detection socket and control buttons. By pressing different control buttons, the heating temperature, heating time and pause time of the wood chip combustion furnace can be set, so that different heating treatments can be performed for different food materials to ensure the taste of each food. At the same time, the temperature detection socket of the control panel 30 can be inserted with a temperature probe temperature sensor to detect the temperature of the combustion chamber 10a, and the display module can display the temperature of the combustion chamber 10a, heating temperature, heating time, pause time, etc. By setting the control panel 30, precise control of the combustion temperature can be realized, thereby optimizing the cooking experience; specifically, in this technical solution, a room temperature detection probe is fixedly provided in the combustion chamber 10a, and the room temperature detection probe is electrically connected to the control panel 30. The control panel 30 receives the detection temperature of the room temperature detection probe and controls the number of rotation cycles of the feeding motor 204, thereby controlling the moving amount of the combustion medium pushed by the stirring rod 202 in the feeding pipe 201a. In this way, it is effectively avoided that when too much fuel is added, all the combustion medium enters the combustion chamber 10a, and the problem that the food is burnt due to the excessively high temperature of the combustion chamber 10a is avoided; similarly, when the detected chamber temperature is too low, the feeding motor 204 can be driven to rotate continuously, so that the combustion chamber 10a enters a temperature-rising state.

The room temperature detection probe can feed back the value of the chamber temperature to the control panel 30 in real time. The control panel 30 controls the number of rotation cycles of the feeding motor 204 according to the value of the chamber temperature. For example, the maximum limit temperature of the wood chip combustion furnace is set to 300°F Fahrenheit. Through the temperature feedback of the room temperature detection probe, the controller 31 knows that the real-time temperature of the combustion chamber 10a is 180°F Fahrenheit. The control program presets that the feeding motor 204 needs to rotate 50 cycles for each 1°F difference. At the same time, according to the structural parameters of the stirring rod 202, it can be determined that the solid combustion medium enters the combustion chamber 10a after the stirring rod 202 rotates 50 cycles, so that the combustion chamber 10a is heated from 180°F to 300°F. Since the room temperature detection probe detects the temperature of the combustion chamber 10a in real time, when the temperature of the combustion chamber 10a reaches the maximum limit temperature during the process of the stirring rod 202 pushing the solid combustion medium, the control panel 30 controls the feeding motor 204 to stop. Based on this, since the heat of the wood chip combustion furnace is always lost, when the wood chip combustion furnace is in operation, the control panel 30 can always control the feeding motor 204 to rotate according to the room temperature detection probe, so that the temperature of the combustion chamber 10a is at the required temperature.

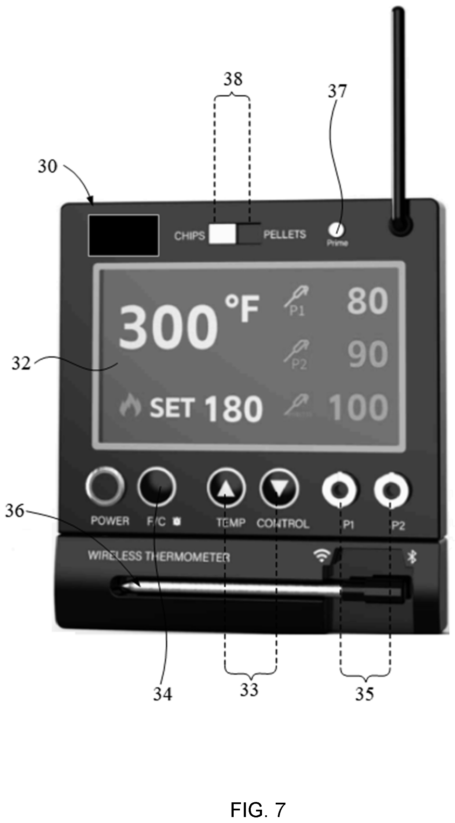

In an embodiment of the present application, as shown in FIG. 7, the control panel 30 includes a controller 31 and a display module 32. The display module 32 is provided with a chamber temperature display screen, and the chamber temperature display screen is electrically connected to the controller 31; the controller 31 is configured to receive the detection temperature of the room temperature detection probe and drive the feeding motor 204 to rotate, and the chamber temperature display screen is configured to display the detection temperature of the room temperature detection probe. In this way, the controller 31 can accurately control the rotation of the feeding motor 204 by receiving the real-time temperature data of the room temperature detection probe, thereby accurately adjusting the temperature in the combustion chamber 10a, which helps to maintain the stability and efficiency of the combustion process. In one embodiment, the chamber temperature display screen in the display module 32 can intuitively display the current temperature, allowing users to easily monitor and adjust the combustion process, improving the user experience.

Specifically, the controller 31 is provided with a temperature detection unit 311, and the chamber temperature display screen is electrically connected to the temperature detection unit 311; the temperature detection unit 311 is configured to receive the detection temperature of the room temperature detection probe and drive the feeding motor 204 to rotate. By integrating the temperature detection unit 311 into the controller 31, integrated temperature monitoring and management are realized. This integrated design simplifies the system structure, reduces the connection points between components, and thus reduces the failure rate. At the same time, the temperature detection unit 311 directly receives the signal from the room temperature detection probe and drives the feeding motor 204 to rotate. This direct response mechanism can adjust the temperature of the combustion chamber 10a more quickly, improving the response speed and efficiency of the system. Based on this, the temperature detection unit 311 can accurately read the temperature data of the probe, ensuring the accuracy of the rotation of the feeding motor 204, thereby realizing fine control of the temperature of the combustion chamber 10a.

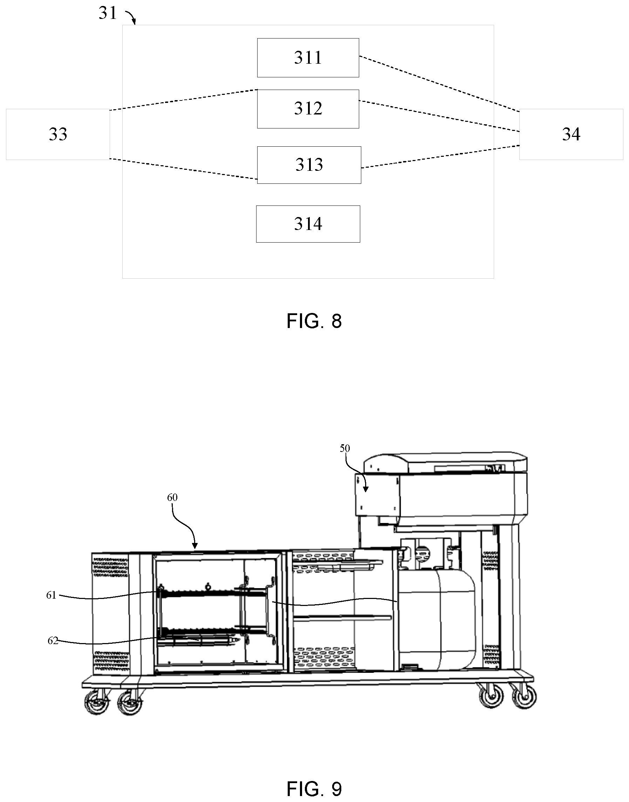

In an embodiment, as shown in FIG. 7 and combined with FIG. 8, the control panel 30 further includes a first control button 33, and the controller 31 is further provided with a temperature preset unit 312. The first control button 33 is electrically connected to the temperature preset unit 312; the temperature preset unit 312 is configured to set the maximum temperature of the combustion chamber 10a, and the first control button 33 is configured to adjust the maximum temperature of the combustion chamber 10a. The first control button 33 includes an up-adjustment button and a down-adjustment button, and different triggering methods are set to realize temperature setting, such as short pressing to increase or decrease and long pressing to continuously increase or decrease, which is not limited here. By quickly adjusting the maximum temperature of the combustion chamber 10a, the user can more effectively control the roasting process of the wood chip combustion furnace and improve the roasting efficiency. The configuration of the temperature preset unit 312 ensures that the combustion chamber 10a will not exceed the safe temperature range, reducing the risks that may occur during the roasting process. Based on this, by accurately controlling the combustion temperature, unnecessary fuel consumption can be reduced, achieving the purpose of energy saving and environmental protection. In one embodiment, the control panel 30 further includes a feeding start-stop button 37, and the feeding start-stop button 37 is electrically connected to the controller 31. The feeding start-stop button 37 is configured to control the start and stop of the feeding motor 203a. In this way, the working state of the feeding motor 203a is manually controlled by pressing the feeding start-stop button 37, thereby controlling the delivery amount of the combustion medium, and at the same time, the feeding can be forced to stop to improve safety performance.

In an embodiment of the present application, the display module 32 is further provided with a preset chamber temperature display screen, and the preset chamber temperature display screen is electrically connected to the temperature preset unit 312; the preset chamber temperature display screen is configured to display the set maximum temperature of the combustion chamber 10a. In this way, the user can clearly know the current safe temperature upper limit of the combustion chamber 10a, which helps to prevent overheating. By setting the chamber temperature display screen and the preset chamber temperature display screen, the roasting visibility of the wood chip combustion furnace can be enhanced.

In an embodiment, in an embodiment of the present application, as shown in FIG. 7 and combined with FIG. 8, the control panel 30 further includes a food temperature detection probe 35. The food temperature detection probe 35 is movably provided on the control panel 30, and the food temperature detection probe 35 is electrically connected to the controller 31; the display module 32 is further provided with a meat temperature display screen, and the meat temperature display screen is electrically connected to the controller 31; the meat temperature display screen is configured to display the detection temperature of the food temperature detection probe 35. Specifically, the control panel 30 is provided with a probe socket for placing the food temperature detection probe 35. When it is necessary to check whether the food is cooked and safe to eat after a certain period of time, the user opens the cover, inserts the food temperature detection probe 35 into the food, and then reads the detection temperature on the meat temperature display screen to judge the edibility of the food; the food temperature detection probe 35 can be a wired probe or a wireless probe, which is not limited here.

In an embodiment, as shown in FIG. 8, the display module 32 is further provided with a preset time display screen, and the controller 31 is further provided with a timing unit 313. The preset time display screen and the first control button 33 are electrically connected to the timing unit 313; the first control button 33 is further configured to set the heating time of the furnace body 10, and the preset time display screen is configured to display the set heating time of the furnace body 10. In this way, the user can set different heating times for different food materials through the first control button 33 to ensure the taste of different foods. At the same time, the preset time display screen can let the user know the set heating time, so that the user can use the gap between the heating times of the food materials to prepare other food materials or prepare for the dining time.

In an embodiment, the display module 32 is further provided with a countdown display screen, and the controller 31 is further provided with a timing unit 314. The timing unit 314 is electrically connected to the timing unit 313; the countdown display screen is configured to display the remaining heating time of the set heating time of the furnace body 10. In this way, the user sets the heating time of the furnace body 10 through the first control button 33, and the timing unit 313 receives these settings. Then, the timing unit 314 starts when the heating starts and starts counting down. The countdown display screen displays the remaining time calculated by the timing unit 314, allowing the user to know the roasting progress at any time. When the timing unit 314 reaches zero, the controller 31 can perform preset operations, such as turning off the heating, thereby completing the roasting process; after the roasting is completed, the user can use the food temperature detection probe 35 to detect the food temperature to determine whether secondary heating is needed or the next food material is to be roasted.

In an embodiment of the present application, as shown in FIG. 7 and combined with FIG. 8, the control panel 30 further includes a switch button 34. The switch button 34 is electrically connected to the timing unit 313 and the preset chamber temperature display screen. Specifically, by short-pressing the switch button 34, the temperature unit of the preset chamber temperature display screen and the chamber temperature display screen can be switched between Fahrenheit °F and Celsius °C; long-pressing the switch button 34 for 3 seconds can switch to the timing setting interface for timing setting and checking; long-pressing the switch button 34 for 5 seconds can turn on/off the timing setting. In this way, the practicability of the wood chip combustion furnace is effectively enhanced to meet user needs.

In an embodiment, in an embodiment of the present application, the control panel 30 further includes a wireless module, and the wireless module is electrically connected to the controller 31; the wireless module is configured to be in communication connection with an intelligent terminal. In this way, the user can view the working status of the wood chip combustion furnace in real time such as heating duration, chamber temperature, etc. through devices such as mobile phones and tablet computers at a position far away from the wood chip combustion furnace, and remotely control the start and stop of the wood chip combustion furnace; the wireless module can be a Bluetooth module, a WIFI module, or a module with both Bluetooth and WIFI functions, which is not limited herein.

In an embodiment, the controller 31 further includes a switching frequency conversion unit, and the switching frequency conversion unit is electrically connected to the feeding motor 203a and the second control button 38; the switching frequency conversion unit is configured to control the current input value of the feeding motor 203a. Specifically, when the wood chip combustion furnace uses wood chips as the combustion source, and the volume of the wood chips is large, in order to facilitate the control of the temperature of the combustion chamber, the second control button 38 is pressed to control the switching frequency conversion unit to make the wood chip combustion furnace enter the first combustion state. In the first combustion state, the switching frequency conversion unit controls the feeding motor 203a to be driven by the first current. At this time, the feeding motor 203a rotates at a slow first rotation speed, thereby controlling the speed at which the pushing rod pushes the wood chips into the combustion chamber. The first rotation speed can be pre-input into the controller, for example, in the first combustion state, the first rotation speed is 10 rotations per minute of the feeding motor 203a, which is not limited here; if granular fuel is used as the combustion source, and the volume of the granular fuel is small, in order to quickly heat up the combustion chamber, the second control button 38 is pressed to control the switching frequency conversion unit to make the wood chip combustion furnace enter the second combustion state. In the second combustion state, the switching frequency conversion unit controls the feeding motor 203a to be driven by the second current. At this time, the value of the second current is greater than that of the first current, and the feeding motor 203a rotates at a fast second rotation speed, which is greater than the first rotation speed, thereby accelerating the speed at which the pushing rod pushes the granular fuel into the combustion chamber. The second rotation speed can be pre-input into the controller, for example, in the second combustion state, the first rotation speed is 20 rotations per minute of the feeding motor 203a, which is not limited here.

In an embodiment, the controller 31 further includes a current detection unit and a motor reverse rotation unit. The current detection unit is configured to detect the current output value of the motor. The wood chip combustion furnace judges whether a material clogging problem occurs based on the magnitude of the motor's output current. Specifically, the controller 31 is set with a feeding current threshold, and the current detection unit detects the output current value of the motor in real time. When the current detection unit detects that the output current value is less than the feeding current threshold, it generates a corresponding judgment signal clogging signal. The controller 31 judges that the wood chip combustion furnace has a material clogging problem according to this signal. At this time, the motor reverse rotation unit provided in the controller 31 starts to operate, that is, the reverse rotation unit outputs a reverse current to the motor. Driven by this reverse current, the motor drives the pushing rod 202a to rotate in reverse, thereby driving the solid combustion medium to move backward, so as to solve the material clogging problem. The reverse current can be the maximum value of the feeding current threshold or any value within the feeding current threshold, which is not limited herein.

In an embodiment of the present application, the control panel 30 further includes a wireless module, and the wireless module is electrically connected to the controller 31; the wireless module is configured to be in communication connection with an intelligent terminal. In this way, the user can view the working status of the wood chip combustion furnace in real time such as heating duration, chamber temperature, etc. through devices such as mobile phones and tablet computers at a position far away from the wood chip combustion furnace, and remotely control the start and stop of the wood chip combustion furnace; the wireless module can be a Bluetooth module, a WIFI module, or a module with both Bluetooth and WIFI functions, which is not limited herein.

In an embodiment, the wood chip combustion furnace is further provided with a wireless probe 36 at the control panel. The control panel 30 further includes a wireless module, and the wireless module is electrically connected to the controller 31. The wireless probe 36 is in communication connection with the wireless module; the wireless module is configured to be in communication connection with an intelligent terminal. In this way, the user can view the working status of the wood chip combustion furnace in real time (such as heating duration, chamber temperature, etc.) through devices such as mobile phones and tablet computers at a position far away from the wood chip combustion furnace, and remotely control the start and stop of the wood chip combustion furnace. At the same time, when the wireless probe 36 is used to detect the temperature of food, the user can also view the food temperature on the intelligent terminal by using the communication function of the wireless module; the wireless module can be a Bluetooth module, a WIFI module, or a module with both Bluetooth and WIFI functions, which is not limited herein.

In an embodiment of the present application, as shown in FIG. 6, the combustion furnace body 10 is further provided with a heat preservation chamber 40 and a side platform extension 50. The heat preservation chamber 40 is provided at the lower part of the combustion chamber 10a; the side platform extension 50 is provided on the side of the combustion furnace body 10 opposite to the feeding mechanism 20.

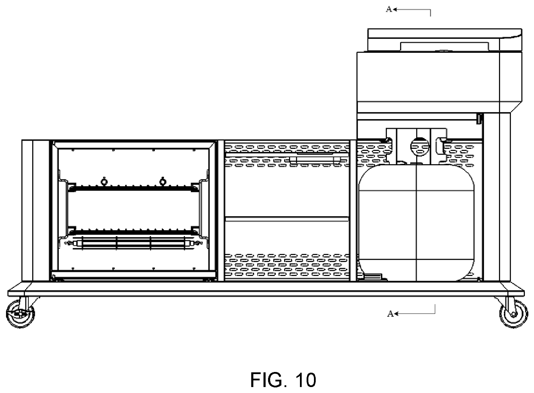

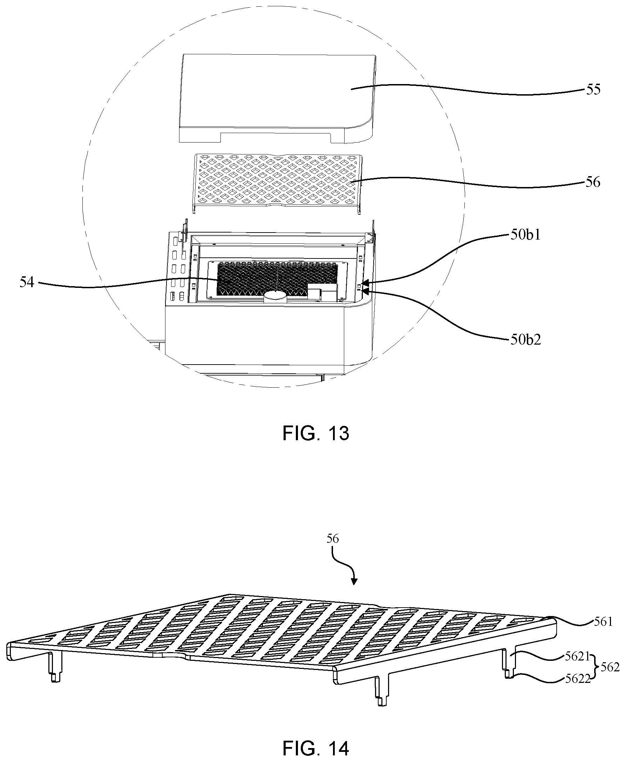

In this embodiment, the heat preservation chamber 40 is provided at the lower part of the combustion chamber 10a, and a plurality of heating tubes and heating net trays are provided in the heat preservation chamber 40. Roasted food can be placed on the heating net trays in the heat preservation chamber 40. After the heating tubes are energized, they can continuously heat the food to prevent the food from cooling down; in an embodiment, the side platform extension 50 is provided on the side of the combustion furnace body 10 opposite to the feeding mechanism 20. In an embodiment, the side platform extension 50 is provided with a plurality of hooks for placing an oil receiving bucket. In another embodiment, the side platform extension 50 is composed of a plurality of sheet metal parts, and a gas furnace is placed inside it. A frying pan can be placed on the upper part of the side platform extension 50, and the frying pan is rotatably connected to the combustion furnace body 10 through a hinge structure to realize folding and storage. When using the wood chip combustion furnace, the user can prepare other foods on the frying pan while the combustion chamber 10a is working, thereby improving the efficiency of food processing. Specifically, as shown in FIGS. 9 to 14, the side platform extension 50 is a second furnace body, and each furnace body has a combustion space, so that multiple foods or multiple types of foods can be heated synchronously. The second furnace body includes a second combustion chamber 51, a gas storage chamber 52 and an ignition device 53. The gas storage chamber 52 is provided below the second combustion chamber 51 and is used for placing a gas tank. The gas outlet end of the ignition device 53 is in communication with the combustion space 50a of the second combustion chamber 51, and the gas outlet end of the ignition device 53 can be connected to the gas tank in the gas storage chamber 52. Based on this, the gas entering the combustion space 50a can be ignited by the ignition device 53 to supply heat for heating food; the second combustion chamber 51 and the gas storage chamber 52 are formed by a plurality of sheet metal parts and enclose to form mutually independent spaces. The ignition device 53 includes a rotary knob, a solenoid valve, a gas pipe, a pilot tube and a thermocouple rod. Both ends of the solenoid valve are respectively connected to a gas pipe to form the gas inlet end and the gas outlet end ejector tube 58 of the ignition device 53. The pilot tube and the thermocouple rod are electrically connected to the solenoid valve. The rotary knob is controlled to make the thermocouple rod generate an electric spark, thereby igniting the gas coming out of the pilot tube to realize ignition. Specifically, the gas outlet end of the ignition device 53 is in communication with the combustion space 50a of the second combustion chamber 51, the gas outlet end of the ignition device 53 can be connected to the gas tank in the gas storage chamber 52, and the ignition ends of the pilot tube and the thermocouple rod face the combustion space 50a, so that the roasting function of the second furnace body can be realized. The second combustion chamber 51 and the gas storage chamber 52 of the second furnace body are distributed up and down. The gas storage chamber 52 is provided below the second combustion chamber 51 and is used for placing a gas tank. A limiting hole is provided at the bottom of the gas storage chamber 52, and the gas tank is seated in the limiting hole to prevent the gas tank from loosening in the second furnace body.

In an embodiment of the present application, the second combustion chamber 51 is provided with a heat equalizing plate 54, and the heat equalizing plate 54 divides the combustion chamber of the second combustion chamber 51 so that the combustion chamber forms a roasting space 50b and the combustion space 50a. Specifically, the gas outlet end of the ignition device 53 i.e., the gas outlet pipe connected to the solenoid valve is located in the combustion space 50a, and the roasting space 50b is used for placing food. The combustion space 50a and the roasting space 50b are separated by the heat equalizing plate 54. In this way, the heat in the combustion space 50a is uniformly transferred to the roasting space 50b through the heat equalizing plate 54, avoiding the problem of uneven heating of food. The heat equalizing plate 54 is made of ceramic material. The heat equalizing plate 54 made of ceramic material can withstand high temperatures, will not deform or be damaged during high-temperature cooking, and has good thermal conductivity, which can effectively transfer heat and ensure the uniformity of food heating; the heat equalizing plate 54 can also be made of stainless steel, cast iron, etc., which is not limited herein.

To achieve the sealed roasting effect, the wood chip combustion furnace further includes a second cover body 55, and the second cover body 55 is hinged to the second combustion chamber 51 through a hinge structure, so as to realize the opening and closing of the second cover body 55 and the second furnace body.

In an embodiment of the present application, the wood chip combustion furnace further includes a side furnace cooker 56, and the side furnace cooker 56 is provided in the roasting space 50b in a liftable manner. By adjusting the height of the side furnace cooker 56 in the roasting space 50b, on the one hand, the distance between the food material and the heat equalizing plate 54 can be changed to avoid direct contact with high temperature; on the other hand, sufficient space is provided for food materials of different shapes to be placed in the roasting space 50b; the side furnace cooker 56 includes but is not limited to structures such as a roasting net and a baking tray, which is not limited herein.

Specifically, the side furnace cooker 56 includes a bearing part 561 and a support leg 562. The bearing part 561 is used for placing food materials, and the support leg 562 is used for supporting and fixing. The support leg 562 includes an integrated first support section 5621 and a second support section 5622. The first support section 5621 is connected to the bearing part 561, and the cross-sectional size of the first support section 5621 is larger than that of the second support section 5622; the roasting space 50b is provided with a first insertion hole 50b1 adapted to the first support section 5621 and a second insertion hole 50b2 adapted to the second support section 5622, and the first insertion hole 50b1 is provided close to the second insertion hole 50b2. In this way, when the food material needs to be close to the combustion space 50a, the second support section 5622 is inserted into the second insertion hole 50b2, and at the same time, since the cross-sectional size of the first support section 5621 is larger than that of the second insertion hole 50b2, the first support section 5621 abuts against the periphery of the second insertion hole 50b2 to realize support and fixation; when the food material needs to be far away from the combustion space 50a, the support leg 562 is inserted into the first insertion hole 50b1, and the first support section 5621 is clamped in the first insertion hole 50b1 to realize support and fixation.

In an embodiment of the present application, in order to prevent the heat in the combustion space 50a from being concentrated at the gas outlet end of the ejector tube 58 of the ignition device 53, the combustion space 50a is provided with a diffusion screen 57, and the diffusion screen 57 is aligned with the gas outlet end of the ignition device 53. In this way, after the gas comes out of the gas outlet end, it contacts the diffusion screen 57 for the first time. Under the action of the surface tension of the diffusion screen 57, the gas is dispersed to the combustion space 50a along the diffusion screen 57, thereby ensuring the uniformity of combustion in the combustion space 50a. At the same time, the porous structure on the diffusion screen 57 can avoid the problem of backfire; the diffusion screen 57 can be a sheet metal structure or a ceramic material, which is not limited herein.

In an embodiment of the present application, the wood chip combustion furnace further includes a heat preservation box 60, and the heat preservation box 60 is provided below the first furnace body 100. In this way, the roasted food can be placed in the heat preservation box 60 for heat preservation and storage, avoiding cooling when placed outside; the heat preservation box 60 is a closed structure, and image processing is performed to facilitate the display of the internal structure of the heat preservation box 60.

In an embodiment of the present application, the heat preservation box 60 is provided with a plurality of heat preservation screens 61, and the plurality of heat preservation screens 61 are provided at intervals along the height direction of the heat preservation box 60, so as to provide sufficient space for food materials of different shapes to be placed in the roasting space 50b.

In an embodiment of the present application, the heat preservation box 60 is provided with a heating tube 62, and the heating tube 62 is provided to avoid any of the heat preservation screens. In this way, through the heating effect of the heating tube 62, the heat preservation box 60 is supplemented with heat in real time, which can avoid the problem that the temperature inside the heat preservation box 60 decreases after the heat of the heat preservation box 60 is lost to the outside.

As shown in FIGS. 6 and 9 to 11, the wood chip combustion furnace includes a first furnace body 100 and a first furnace cover. The first furnace cover is hinged to the first furnace body 100 and encloses to form a first combustion chamber. The wood chip combustion furnace further includes a second furnace body 200, and the second furnace body 200 is provided on one side of the first furnace body 100; the second furnace body 200 includes a second combustion chamber 51, a gas storage chamber 52 and an ignition device 53. The ignition device 53 is provided in the second combustion chamber 51, the gas storage chamber 52 is provided below the second combustion chamber 51 and is used for placing a gas tank; the gas outlet end of the ignition device 53 is in communication with the combustion space 50a of the second combustion chamber 51, and the gas outlet end of the ignition device 53 can be connected to the gas tank in the gas storage chamber 52.

In the technical solution of the present application, the wood chip combustion furnace includes a first furnace body 100 and a second furnace body 200, and each furnace body has a combustion space 50a. In this way, multiple foods or multiple types of foods can be heated synchronously. Specifically, the second furnace body 200 includes a second combustion chamber 51, a gas storage chamber 52 and an ignition device 53. The gas storage chamber 52 is provided below the second combustion chamber 51 and is used for placing a gas tank. The gas outlet end of the ignition device 53 is in communication with the combustion space 50a of the second combustion chamber 51, and the gas outlet end of the ignition device 53 can be connected to the gas tank in the gas storage chamber 52. Based on this, the gas entering the combustion space 50a can be ignited by the ignition device 53 to supply heat for heating food.

The wood chip combustion furnace can be used indoors or outdoors for food roasting or baking. The main part of the wood chip combustion furnace is the first furnace body 100 and the first furnace cover. The first furnace cover is hinged to the first furnace body 100 and encloses to form a first combustion chamber. During the process of heating food by the wood chip combustion furnace, the first furnace cover is tightly closed to the first furnace body 100 to make the first combustion chamber form a sealed space, thereby avoiding heat loss. Specifically, a roasting net or a baking tray is provided in the first combustion chamber. Meanwhile, the roasting net or baking tray can be screwed or plugged into screw holes or fixing parts at different heights, so as to change the height of the roasting net or baking tray in the first combustion chamber, so as to provide a suitable space for heating different food materials. In the first combustion chamber, there is an area where combustion medium burns, and to prevent the roasting net or baking tray from directly contacting an open flame, the roasting net or baking tray has a certain distance from the combustion area; the heat generated by the combustion medium circulates in the first combustion chamber, thereby heating the food in the entire first combustion chamber. Of course, during the heating process, heat will flow to the outside through the furnace body and the cover body.

In an embodiment of the present application, in order to improve the roasting efficiency of the wood chip combustion furnace, an additional roasting area is provided on one side of the first furnace body 100. Specifically, the wood chip combustion furnace includes a second furnace body 200, and the second furnace body 200 is provided on one side of the first furnace body 100; the second furnace body 200 includes a second combustion chamber 51, a gas storage chamber 52 and an ignition device 53. The second combustion chamber 51 and the gas storage chamber 52 are formed by a plurality of sheet metal parts and enclose to form mutually independent spaces. The ignition device 53 includes a rotary knob, a solenoid valve, a gas pipe, a pilot tube and a thermocouple rod. Both ends of the solenoid valve are respectively connected to a gas pipe to form the gas inlet end and the gas outlet end ejector tube 58 of the ignition device 53. The pilot tube and the thermocouple rod are electrically connected to the solenoid valve. The rotary knob is controlled to make the thermocouple rod generate an electric spark, thereby igniting the gas coming out of the pilot tube to realize ignition. Specifically, the gas outlet end of the ignition device 53 is in communication with the combustion space 50a of the second combustion chamber 51, the gas outlet end of the ignition device 53 can be connected to the gas tank in the gas storage chamber 52, and the ignition ends of the pilot tube and the thermocouple rod face the combustion space 50a, so that the roasting function of the second furnace body 200 can be realized. Among them, the combustion chamber of the second combustion chamber 51 is independent of the first combustion chamber, and both can be used independently. The ignition devices 53 of the first furnace body 100 and the second furnace body 200 are also provided independently. The first furnace body 100 mainly burns wood chips, charcoal particles, etc., and the second furnace body 200 burns combustible gases such as natural gas and liquefied petroleum gas. The second combustion chamber 51 and the gas storage chamber 52 of the second furnace body 200 are distributed up and down. The gas storage chamber 52 is provided below the second combustion chamber 51 and is used for placing a gas tank. A limiting hole is provided at the bottom of the gas storage chamber 52, and the gas tank is seated in the limiting hole to prevent the gas tank from loosening in the second furnace body 200.

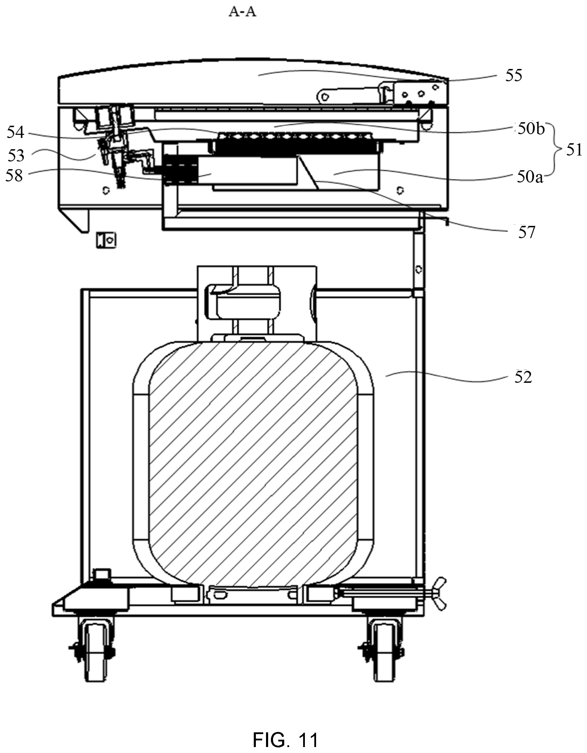

In an embodiment of the present application, as shown in FIG. 11, the second combustion chamber 51 is provided with a heat equalizing plate 54, and the heat equalizing plate 54 divides the combustion chamber of the second combustion chamber 51 so that the combustion chamber forms a roasting space 50b and the combustion space 50a. Specifically, the gas outlet end of the ignition device 53 i.e., the gas outlet pipe connected to the solenoid valve is located in the combustion space 50a, and the roasting space 50b is used for placing food. The combustion space 50a and the roasting space 50b are separated by the heat equalizing plate 54. In this way, the heat in the combustion space 50a is uniformly transferred to the roasting space 50b through the heat equalizing plate 54, avoiding the problem of uneven heating of food.

In an embodiment of the present application, the heat equalizing plate 54 is made of ceramic material. The heat equalizing plate 54 made of ceramic material can withstand high temperatures, will not deform or be damaged during high-temperature cooking, and has good thermal conductivity, which can effectively transfer heat and ensure the uniformity of food heating; the heat equalizing plate 54 can also be made of stainless steel, cast iron, etc., which is not limited herein.

To achieve the sealed roasting effect, as shown in FIG. 11, the wood chip combustion furnace further includes a second cover body 55, and the second cover body 55 is hinged to the second combustion chamber 51 through a hinge structure, so as to realize the opening and closing of the second cover body 55 and the second furnace body 200.

In an embodiment of the present application, as shown in FIG. 11, the wood chip combustion furnace further includes a side furnace cooker 56, and the side furnace cooker 56 is provided in the roasting space 50b in a liftable manner. By adjusting the height of the side furnace cooker 56 in the roasting space 50b, on the one hand, the distance between the food material and the heat equalizing plate 54 can be changed to avoid direct contact with high temperature; on the other hand, sufficient space is provided for food materials of different shapes to be placed in the roasting space 50b; the side furnace cooker 56 includes but is not limited to structures such as a roasting net and a baking tray, which is not limited herein.

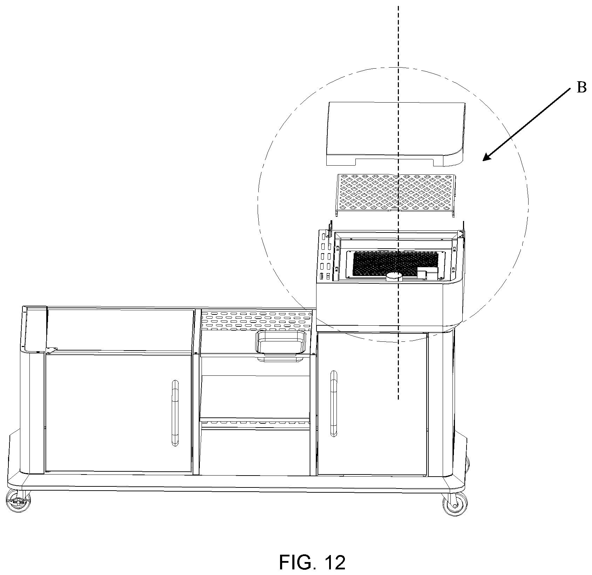

Specifically, as shown in FIGS. 12 to 14, the side furnace cooker 56 includes a bearing part 561 and a support leg 562. The bearing part 561 is used for placing food materials, and the support leg 562 is used for supporting and fixing. The support leg 562 includes an integrated first support section 5621 and a second support section 5622. The first support section 5621 is connected to the bearing part 561, and the cross-sectional size of the first support section 5621 is larger than that of the second support section 5622; the roasting space 50b is provided with a first insertion hole 50b1 adapted to the first support section 5621 and a second insertion hole 50b2 adapted to the second support section 5622, and the first insertion hole 50b1 is provided close to the second insertion hole 50b2. In this way, when the food material needs to be close to the combustion space 50a, the second support section 5622 is inserted into the second insertion hole 50b2, and at the same time, since the cross-sectional size of the first support section 5621 is larger than that of the second insertion hole 50b2, the first support section 5621 abuts against the periphery of the second insertion hole 50b2 to realize support and fixation; when the food material needs to be far away from the combustion space 50a, the support leg 562 is inserted into the first insertion hole 50b1, and the first support section 5621 is clamped in the first insertion hole 50b1 to realize support and fixation; the first insertion hole 50b1 and the second insertion hole 50b2 can be circular holes, square holes or holes of any shape, which is not limited herein.

As shown in FIG. 11, in order to prevent the heat in the combustion space 50a from being concentrated at the gas outlet end of the ejector tube 58 of the ignition device 53, the combustion space 50a is provided with a diffusion screen 57, and the diffusion screen 57 is aligned with the gas outlet end of the ignition device 53. In this way, after the gas comes out of the gas outlet end, it contacts the diffusion screen 57 for the first time. Under the action of the surface tension of the diffusion screen 57, the gas is dispersed to the combustion space 50a along the diffusion screen 57, thereby ensuring the uniformity of combustion in the combustion space 50a. At the same time, the porous structure on the diffusion screen 57 can avoid the problem of backfire; the diffusion screen 57 can be a sheet metal structure or a ceramic material, which is not limited herein.

In an embodiment of the present application, as shown in FIGS. 1 to 3, the wood chip combustion furnace further includes a heat preservation box 60, and the heat preservation box 60 is provided below the first furnace body 100. In this way, the roasted food can be placed in the heat preservation box 60 for heat preservation and storage, avoiding cooling when placed outside; the heat preservation box 60 is a closed structure, and image processing is performed to facilitate the display of the internal structure of the heat preservation box 60.

In an embodiment of the present application, as shown in FIG. 2, the heat preservation box 60 is provided with a plurality of heat preservation screens 61, and the plurality of heat preservation screens 61 are provided at intervals along the height direction of the heat preservation box 60, so as to provide sufficient space for food materials of different shapes to be placed in the roasting space 50b.

In an embodiment of the present application, as shown in FIG. 2, the heat preservation box 60 is provided with a heating tube 62, and a heating wire electrically connected to the power supply of the wood chip combustion furnace is provided in the heating tube 62. The heating tube 62 is provided to avoid any of the heat preservation screens. In this way, through the heating effect of the heating tube 62, the heat preservation box 60 is supplemented with heat in real time, which can avoid the problem that the temperature inside the heat preservation box 60 decreases after the heat of the heat preservation box 60 is lost to the outside.

The wood chip combustion furnace proposed in the present application, as shown in FIGS. 1 and 2, includes a combustion furnace body 10 and a feeding mechanism 20 connected to the combustion furnace body 10; the combustion furnace body 10 is provided with a control panel 30 and a room temperature detection probe provided in the combustion furnace body 10, the feeding mechanism 20 is provided with a feeding motor 203a, a pushing rod 202a rotatably connected to the feeding motor 203a and a material-passing pipe 201a, the pushing rod 202a is provided in the material-passing pipe 201a, and the discharging port of the material-passing pipe 201a is in communication with the combustion chamber 10a of the combustion furnace body 10; among them, the room temperature detection probe is fixedly provided in the combustion chamber 10a of the combustion furnace body 10 and is configured to detect the temperature of the combustion chamber 10a; the control panel 30 can receive the temperature of the combustion chamber 10a and drive the feeding motor 203a to rotate.

In the technical solution of the present application, a room temperature detection probe is fixedly provided in the combustion chamber 10a of the combustion furnace body 10 of the wood chip combustion furnace, the room temperature detection probe is electrically connected to the control panel 30, and the control panel 30 receives the detection temperature of the room temperature detection probe and controls the number of rotation cycles of the feeding motor 203a, thereby controlling the moving amount of the combustion medium pushed by the pushing rod 202a in the material-passing pipe 201a. In this way, it is effectively avoided that when too much fuel is added, all the combustion medium enters the combustion chamber 10a, and the problem that food is burnt due to the excessively high temperature of the combustion chamber 10a is avoided; similarly, when the detected chamber temperature is too low, the feeding motor 203a can be driven to rotate continuously, so that the combustion chamber 10a enters a temperature-rising state.

The wood chip combustion furnace can be used indoors or outdoors for food roasting or baking. The combustion furnace body 10 includes a furnace body and a cover body. The cover body is hinged to the furnace body and can enclose to form a combustion chamber 10a. During the process of heating food by the wood chip combustion furnace, the cover body is tightly closed to the furnace body to make the combustion chamber 10a form a sealed space, thereby avoiding heat loss. Specifically, a roasting net or a baking tray is provided in the combustion chamber 10a. Meanwhile, the roasting net or baking tray can be screwed or plugged into screw holes or fixing parts at different heights, so as to change the height of the roasting net or baking tray in the combustion chamber 10a, so as to provide a suitable space for heating different food materials. In the combustion chamber 10a, there is an area where combustion medium burns, and to prevent the roasting net or baking tray from directly contacting an open flame, the roasting net or baking tray has a certain distance from the combustion area; the heat generated by the combustion medium circulates in the combustion chamber 10a, thereby heating the food in the entire combustion chamber 10a. During the heating process, heat will flow to the outside through the furnace body and the cover body.

In order to supplement the heat of the combustion chamber 10a, a feeding mechanism 20 is provided on one side of the combustion furnace body 10. The feeding mechanism 20 is responsible for conveying solid combustion media such as wood chips into the combustion chamber 10a. Specifically, the feeding mechanism 20 is provided with a feeding pipe and a pushing rod 202a. The feeding channel of the feeding pipe is in communication with the combustion chamber 10a, the pushing rod 202a is rotatably provided in the feeding channel of the feeding pipe, the outer circumferential surface of the pushing rod 202a is convexly provided with a spiral-shaped stirring part, and the stirring part is provided to extend along the axial direction of the pushing rod 202a. In this way, during the process that the solid combustion medium enters the combustion chamber 10a along the feeding channel, the pushing rod 202a rotated continuously by the feeding motor 203a links the stirring part to push the solid combustion medium to move toward the combustion chamber 10a. In another embodiment, the stirring part can be composed of a series of cylindrical protrusions, so that the stirring part generates friction and pushing force on the solid combustion medium during rotation. As mentioned above, the stirring part is provided to extend along the axial direction of the pushing rod 202a. In this way, the stirring part can provide uniform stirring force over the entire length of the pushing rod 202a, ensuring that wood chips or other materials are evenly distributed during transportation, avoiding accumulation or gaps, and during transportation, the stirring action can continuously act on the solid combustion medium to keep the solid combustion medium flowing, effectively preventing the solid combustion medium from being blocked in the pushing rod 202a.

In order to realize the controllable entry of the solid combustion medium into the combustion chamber 10a, a room temperature detection probe is provided inside the combustion chamber 10a. The room temperature detection probe is electrically connected to the control panel 30 of the combustion furnace body 10. In this way, the room temperature detection probe can feed back the value of the chamber temperature to the control panel 30 in real time, and the control panel 30 controls the number of rotation cycles of the feeding motor 203a according to the value of the chamber temperature. For example, the maximum limit temperature of the wood chip combustion furnace is set to 300°F Fahrenheit. Through the temperature feedback of the room temperature detection probe, the controller 31 knows that the real-time temperature of the combustion chamber 10a is 180°F Fahrenheit. Through the preset control program, for every 1°F difference, the feeding motor 203a needs to rotate 50 cycles. At the same time, according to the structural parameters of the pushing rod 202a, it can be determined that after the pushing rod 202a rotates 50 cycles, the solid combustion medium enters the combustion chamber 10a, so that the temperature of the combustion chamber 10a rises from 180°F to 300°F. Since the room temperature detection probe detects the temperature of the combustion chamber 10a in real time, during the process that the pushing rod 202a pushes the solid combustion medium, when the temperature of the combustion chamber 10a reaches the maximum limit temperature, the control panel 30 controls the feeding motor 203a to stop operating. Based on this, since the heat of the wood chip combustion furnace is always lost, when the wood chip combustion furnace is in an operating state, the control panel 30 can always control the feeding motor 203a to rotate according to the room temperature detection probe, so that the temperature of the combustion chamber 10a is at the required temperature.

In an embodiment of the present application, as shown in FIG. 7, the control panel 30 includes a controller 31 and a display module 32, the display module 32 is provided with a chamber temperature display screen, and the chamber temperature display screen is electrically connected to the controller 31; the controller 31 is configured to receive the detection temperature of the room temperature detection probe and drive the feeding motor 203a to rotate, and the chamber temperature display screen is configured to display the detection temperature of the room temperature detection probe. In this way, the controller 31 can accurately control the rotation of the feeding motor 203a by receiving the real-time temperature data of the room temperature detection probe, thereby accurately adjusting the temperature in the combustion chamber 10a, which helps to maintain the stability and efficiency of the combustion process; in an embodiment, the chamber temperature display screen in the display module 32 can intuitively display the current temperature, allowing the user to easily monitor and adjust the combustion process, improving the user experience.

Specifically, the controller 31 is provided with a temperature detection unit 311, and the chamber temperature display screen is electrically connected to the temperature detection unit 311; the temperature detection unit 311 is configured to receive the detection temperature of the room temperature detection probe and drive the feeding motor 203a to rotate. By integrating the temperature detection unit 311 into the controller 31, integrated temperature monitoring and management are realized. This integrated design simplifies the system structure, reduces the number of connection points between components, and thus reduces the failure rate. At the same time, the temperature detection unit 311 directly receives the signal from the room temperature detection probe and drives the feeding motor 203a to rotate. Such a direct response mechanism can adjust the temperature of the combustion chamber 10a more quickly, improving the response speed and efficiency of the system. Based on this, the temperature detection unit 311 can accurately read the temperature data of the probe, ensuring the accuracy of the rotation of the feeding motor 203a, thereby realizing fine control of the temperature of the combustion chamber 10a.

In an embodiment, as shown in FIG. 7 and combined with FIG. 8, the control panel 30 further includes a first control button 33, and the controller 31 is further provided with a temperature preset unit 312. The first control button 33 is electrically connected to the temperature preset unit 312; the temperature preset unit 312 is configured to set the maximum temperature of the combustion chamber 10a, and the first control button 33 is configured to adjust the maximum temperature of the combustion chamber 10a. The first control button 33 includes an upward adjustment button and a downward adjustment button, and different triggering methods are set to realize temperature setting, such as short pressing to increase/decrease and long pressing to continuously increase/decrease, which is not limited herein. By quickly adjusting the maximum temperature of the combustion chamber 10a, the user can more effectively control the roasting process of the wood chip combustion furnace and improve the roasting efficiency. The configuration of the temperature preset unit 312 ensures that the combustion chamber 10a will not exceed the safe temperature range, reducing the risks that may occur during the roasting process. Based on this, by accurately controlling the combustion temperature, unnecessary fuel consumption can be reduced, achieving the purpose of energy conservation and environmental protection; in an embodiment, the control panel 30 further includes a feeding start-stop button 37, and the feeding start-stop button 37 is electrically connected to the controller 31. The feeding start-stop button 37 is configured to control the start and stop of the feeding motor 203a. In this way, the working state of the feeding motor 203a is manually controlled by pressing the feeding start-stop button 37, thereby controlling the conveying amount of the combustion medium, and at the same time, the feeding can be forced to stop to improve safety performance.

In an embodiment of the present application, the display module 32 is further provided with a preset chamber temperature display screen, and the preset chamber temperature display screen is electrically connected to the temperature preset unit 312; the preset chamber temperature display screen is configured to display the set maximum temperature of the combustion chamber 10a. In this way, the user can clearly know the current safe temperature upper limit of the combustion chamber 10a, which helps to prevent overheating. By setting the chamber temperature display screen and the preset chamber temperature display screen, the roasting visualization of the wood chip combustion furnace can be enhanced.

In an embodiment, in an embodiment of the present application, as shown in FIG. 7 and combined with FIG. 8, the control panel 30 further includes a food temperature detection probe 35. The food temperature detection probe 35 is movably provided on the control panel 30, and the food temperature detection probe 35 is electrically connected to the controller 31; the display module 32 is further provided with a meat temperature display screen, and the meat temperature display screen is electrically connected to the controller 31; the meat temperature display screen is configured to display the detection temperature of the food temperature detection probe 35. Specifically, the control panel 30 is provided with a probe socket for placing the food temperature detection probe 35. When it is necessary to determine whether the food is cooked through and safe to eat after a certain period of time, the user opens the cover body, inserts the food temperature detection probe 35 into the food, and then reads the detection temperature on the meat temperature display screen to determine the edibility of the food; the food temperature detection probe 35 can be a wired probe or a wireless probe, which is not limited herein.

In an embodiment, as shown in FIG. 8, the display module 32 is further provided with a preset time display screen, and the controller 31 is further provided with a timing unit 313. The preset time display screen and the first control button 33 are electrically connected to the timing unit 313; the first control button 33 is further configured to set the heating time of the furnace body 10, and the preset time display screen is configured to display the set heating time of the furnace body 10. In this way, the user can set different heating times for different food materials through the first control button 33 to ensure the taste of different foods. At the same time, the preset time display screen can let the user know the set heating time, so that the user can use the gap between the heating times of the food materials to prepare other food materials or prepare for the dining time.

In an embodiment, the display module 32 is further provided with a countdown time display screen, and the controller 31 is further provided with a time-keeping unit 314. The time-keeping unit 314 is electrically connected to the timing unit 313; the countdown time display screen is configured to display the remaining time of the set heating time of the furnace body 10. In this way, the user sets the heating time of the furnace body 10 through the first control button 33, the timing unit 313 receives these settings, and then the time-keeping unit 314 starts when heating begins and starts counting down. The countdown time display screen displays the remaining time calculated by the time-keeping unit 314, allowing the user to know the roasting progress at any time. When the time-keeping unit 314 reaches zero, the controller 31 can execute preset operations, such as turning off the heating, thereby completing the roasting process; after the roasting is completed, the user can use the food temperature detection probe 35 to detect the food temperature to determine whether secondary heating is needed or the next food material is to be roasted.

In an embodiment of the present application, as shown in FIG. 7 and FIG. 8, the control panel 30 further includes a switching button 34. The switching button 34 is electrically connected to the timing unit 313 and the preset chamber temperature display screen. Specifically, by short-pressing the switching button 34, the temperature units of the preset chamber temperature display screen and the chamber temperature display screen can be switched between Fahrenheit °F and Celsius °C; by long-pressing the switching button 34 for 3 seconds, the interface can be switched to the timing setting interface for timing setting and checking; by long-pressing the switching button 34 for 5 seconds, the timing setting can be turned on/off. In this way, the practicability of the wood chip combustion furnace is effectively enhanced to meet user needs.

In an embodiment, the controller 31 further includes a switching frequency conversion unit, and the switching frequency conversion unit is electrically connected to the feeding motor 203a and the second control button 38; the switching frequency conversion unit is configured to control the current input value of the feeding motor 203a. Specifically, when the wood chip combustion furnace uses wood chips as the combustion source and the wood chips have a large volume, in order to facilitate the control of the temperature of the combustion chamber, the second control button 38 is pressed to control the switching frequency conversion unit, so that the wood chip combustion furnace enters the first combustion state. In the first combustion state, the switching frequency conversion unit controls the feeding motor 203a to be driven by the first current. At this time, the feeding motor 203a rotates at a slow first rotation speed, thereby controlling the speed at which the pushing rod pushes the wood chips into the combustion chamber. The first rotation speed can be pre-input into the controller; for example, in the first combustion state, the first rotation speed is 10 rotations per minute of the feeding motor 203a, which is not limited herein; if granular fuel is used as the combustion source and the granular fuel has a small volume, in order to quickly heat up the combustion chamber, the second control button 38 is pressed to control the switching frequency conversion unit, so that the wood chip combustion furnace enters the second combustion state. In the second combustion state, the switching frequency conversion unit controls the feeding motor 203a to be driven by the second current. At this time, the value of the second current is greater than that of the first current, and the feeding motor 203a rotates at a fast second rotation speed, which is greater than the first rotation speed, thereby accelerating the speed at which the pushing rod pushes the granular fuel into the combustion chamber. The second rotation speed can be pre-input into the controller; for example, in the second combustion state, the second rotation speed is 20 rotations per minute of the feeding motor 203a, which is not limited herein.

In an embodiment, the controller 31 further includes a current detection unit and a motor reverse rotation unit, and the current detection unit is configured to detect the current output value of the motor. The wood chip combustion furnace judges whether a material clogging problem occurs according to the magnitude of the motor's output current. Specifically, the controller 31 is set with a feeding current threshold, and the current detection unit detects the output current value of the motor in real time. When the current detection unit detects that the output current value is less than the feeding current threshold, it generates a corresponding judgment signal clogging signal. The controller 31 judges that the wood chip combustion furnace has a material clogging problem according to this signal. At this time, the motor reverse rotation unit provided in the controller 31 starts to operate, that is, the reverse rotation unit outputs a reverse current to the motor. Driven by this reverse current, the motor drives the pushing rod 202a to rotate in reverse, thereby driving the solid combustion medium to move backward, so as to solve the material clogging problem. The reverse current can be the maximum value of the feeding current threshold or any value within the feeding current threshold, which is not limited herein.

In an embodiment, in an embodiment of the present application, the control panel 30 further includes a wireless module, and the wireless module is electrically connected to the controller 31; the wireless module is configured to be in communication connection with an intelligent terminal. In this way, the user can view the working status of the wood chip combustion furnace in real time such as heating duration, chamber temperature, etc. through devices such as mobile phones and tablet computers at a position far away from the wood chip combustion furnace, and remotely control the start and stop of the wood chip combustion furnace; the wireless module can be a Bluetooth module, a WIFI module, or a module with both Bluetooth and WIFI functions, which is not limited herein.

In an embodiment, the wood chip combustion furnace is further provided with a wireless probe 36 at the control panel. The control panel 30 further includes a wireless module, and the wireless module is electrically connected to the controller 31. The wireless probe 36 is in communication connection with the wireless module; the wireless module is configured to be in communication connection with an intelligent terminal. In this way, the user can view the working status of the wood chip combustion furnace in real time such as heating duration, chamber temperature, etc. through devices such as mobile phones and tablet computers at a position far away from the wood chip combustion furnace, and remotely control the start and stop of the wood chip combustion furnace. At the same time, when the wireless probe 36 is used to detect the temperature of food, the user can also view the food temperature on the intelligent terminal by using the communication function of the wireless module; the wireless module can be a Bluetooth module, a WIFI module, or a module with both Bluetooth and WIFI functions, which is not limited herein.

The above are only exemplary embodiments of the present application, and are not intended to limit the patent scope of the present application. Any equivalent structural transformation made under the technical concept of the present application using the contents of the present application specification and the attached drawings, or direct/indirect application in other related technical fields, is included in the patent protection scope of the present application.

## Claims

1. A wood chip combustion furnace, **characterized by** comprising:
a combustion furnace body (10) provided with a combustion chamber (10a); and
a feeding mechanism (20) provided with a feeding pipe (201) and a stirring rod (202),
wherein the feeding mechanism (20) is connected to the combustion furnace body (10); a feeding channel of the feeding pipe (201) is in communication with the combustion chamber (10a), the stirring rod (202) is rotatably provided in the feeding channel of the feeding pipe (201), an outer circumferential surface of the stirring rod (202) is convexly provided with a stirring part (203), and the stirring part (203) extends along an axial direction of the stirring rod (202).

2. The wood chip combustion furnace according to claim 1, wherein the stirring part (203) is a spiral convex part.

3. The wood chip combustion furnace according to claim 2, wherein an end of the stirring part (203) in a radial direction of the stirring rod (202) is provided with a stirring passage (20a) and an inner wall of the feeding pipe (201) is provided with the stirring passage (20a).

4. The wood chip combustion furnace according to claim 1, wherein the feeding mechanism (20) further comprises a feeding motor (204), the feeding motor (204) is fixed at an end of the feeding pipe (201), the end of the feeding pipe (201) is away from the combustion furnace body (10), and the stirring rod (202) is connected to a rotating output shaft of the feeding motor (204).

5. The wood chip combustion furnace according to claim 1, wherein:
the feeding mechanism (20) further comprises a feeding hopper (205), and the feeding hopper (205) is fixedly connected to an outer side wall of the combustion furnace body (10); and
the feeding hopper (205) has a feeding port and a discharging port, the discharging port is in communication with the feeding port, and the discharging port is in communication with the feeding channel of the feeding pipe (201).

6. The wood chip combustion furnace according to claim 5, wherein:
the feeding mechanism (20) further comprises a discharging assembly, and the discharging assembly comprises a discharging hopper (206) and a discharging baffle (207); and
a feeding port of the discharging hopper (206) is in communication with a material-passing channel of the feeding hopper (205), and the discharging baffle (207) is slidably provided at the feeding port of the discharging hopper (206).

7. The wood chip combustion furnace according to claim 5, wherein:
the feeding mechanism (20) further comprises a buffer screen (208) and a material-vibrating assembly, and the buffer screen (208) is provided at an end of the feeding hopper (205) close to the feeding port; and
the material-vibrating assembly comprises a stirring motor (209) fixedly connected to the feeding hopper (205) and a material-vibrating rod (210) connected to an output end of the stirring motor (209), and a vibrating end of the material-vibrating rod (210) is provided between the buffer screen (208) and the discharging port.

8. The wood chip combustion furnace according to claim 1, wherein:
the combustion furnace body (10) is provided with a detachable fire pot (101) in the combustion chamber (10a), and a combustion space of the fire pot (101) is in communication with the feeding channel of the feeding pipe (201); and
an outer circumferential wall of the fire pot (101) is provided with a plurality of air dampers (101a), and the air dampers (101a) are provided at intervals along the outer circumferential wall of the fire pot (101).

9. The wood chip combustion furnace according to any one of claims 1 to 8, wherein:
the combustion furnace body (10) is provided with a control panel (30) and a room temperature detection probe provided in the combustion furnace body (10), the feeding mechanism (20) is provided with a feeding motor (203a), a pushing rod (202a) rotatably connected to the feeding motor (203a), and a material-passing pipe (201a), the pushing rod (202a) is provided at the material-passing pipe (201a), and a discharging port of the material-passing pipe (201a) is in communication with the combustion chamber (10a) of the combustion furnace body (10);
the room temperature detection probe is fixedly provided in the combustion chamber (10a) of the combustion furnace body (10) and the room temperature detection probe is configured to detect a temperature of the combustion chamber (10a); and
the control panel (30) is configured to receive the temperature of the combustion chamber (10a) and drive the feeding motor (203a) to rotate.

10. The wood chip combustion furnace according to claim 9, wherein:
the control panel (30) comprises a controller (31) and a display module (32), the display module (32) is provided with a chamber temperature display screen, and the chamber temperature display screen is electrically connected to the controller (31); and
the controller (31) is configured to receive a detection temperature of the room temperature detection probe and drive the feeding motor (203a) to rotate, and the chamber temperature display screen is configured to display the detection temperature of the room temperature detection probe.

11. The wood chip combustion furnace according to claim 10, wherein the controller (31) is provided with a temperature detection unit (311), the chamber temperature display screen is electrically connected to the temperature detection unit (311), and the temperature detection unit (311) is configured to receive the detection temperature of the room temperature detection probe and drive the feeding motor (203a) to rotate.

12. The wood chip combustion furnace according to claim 11, wherein:
the control panel (30) further comprises a first control button (33), the controller (31) is further provided with a temperature preset unit (312), and the first control button (33) is electrically connected to the temperature preset unit (312); and
the temperature preset unit (312) is configured to set a maximum temperature of the combustion chamber (10a), and the first control button (33) is configured to adjust the maximum temperature of the combustion chamber (10a).

13. The wood chip combustion furnace according to claim 12, wherein the display module (32) is further provided with a preset chamber temperature display screen, the preset chamber temperature display screen is electrically connected to the temperature preset unit (312), and the preset chamber temperature display screen is configured to display the set maximum temperature of the combustion chamber (10a).

14. The wood chip combustion furnace according to claim 10, wherein:
the control panel (30) further comprises a food temperature detection probe (35), the food temperature detection probe (35) is movably provided on the control panel (30), and the food temperature detection probe (35) is electrically connected to the controller (31); and
the display module (32) is further provided with a meat temperature display screen, the meat temperature display screen is electrically connected to the controller (31), and the meat temperature display screen is configured to display the detection temperature of a food temperature detection probe (35).

15. The wood chip combustion furnace according to claim 12, wherein:
the display module (32) is further provided with a preset time display screen, the controller (31) is further provided with a timing unit (313), and the preset time display screen and the first control button (33) are electrically connected to the timing unit (313); and
the first control button (33) is further configured to set a heating time of the combustion furnace body (10), and the preset time display screen is configured to display the set heating time of the combustion furnace body (10).

16. The wood chip combustion furnace according to claim 15, wherein:
the display module (32) is further provided with a countdown time display screen, the controller (31) is further provided with a time-keeping unit (314), and the time-keeping unit (314) is electrically connected to the timing unit (313);
the countdown time display screen is configured to display a remaining time of the set heating time of the combustion furnace body (10); and
the control panel (30) further comprises a switching button (34), and the switching button (34) is electrically connected to the timing unit (313) and the preset chamber temperature display screen.

17. The wood chip combustion furnace according to claim 12, wherein:
the controller (31) further comprises a switching frequency conversion unit and a second control button (38), the switching frequency conversion unit is electrically connected to the feeding motor (203a), and the switching frequency conversion unit is electrically connected to the second control button (38); and
the second control button (38) is configured to control the switching frequency conversion unit to switch between a first working state and a second working state, and the switching frequency conversion unit is configured to control a current input value of the feeding motor (203a) in the first working state and the second working state.

18. The wood chip combustion furnace according to claim 10, wherein:
the controller (31) further comprises a current detection unit and a motor reverse rotation unit, and the motor reverse rotation unit and the current detection unit are provided in parallel; and
the current detection unit is configured to detect a current output value of the feeding motor (203a), and the motor reverse rotation unit is configured to output reverse current to make the feeding motor (203a) rotate in reverse.

19. The wood chip combustion furnace according to any one of claims 1 to 8, wherein:
the combustion furnace body (10) is further provided with a heat preservation chamber (40) and a side platform extension (50), and the heat preservation chamber (40) is provided at the lower part of the combustion chamber (10a); and
the side platform extension (50) is provided on a side of the combustion furnace body (10), the side of the combustion furnace body (10) is opposite to the feeding mechanism (20).

20. A wood chip combustion furnace, **characterized by** comprising:
a first furnace body (100);
a first furnace cover; and
a second furnace body (200), wherein:
the first furnace cover is hinged to the first furnace body (100), and the first furnace cover and the first furnace body (100) are enclosed to form a first combustion chamber,
the second furnace body (200) is provided on a side of the first furnace body (100);
the second furnace body (200) comprises a second combustion chamber (51), a gas storage chamber (52) and an ignition device (53), the ignition device (53) is provided in the second combustion chamber (51), the gas storage chamber (52) is provided below the second combustion chamber (51) and the gas storage chamber (52) is configured for placing a gas tank; and
a gas outlet end of the ignition device (53) is in communication with a combustion space (50a) of the second combustion chamber (51), and the gas outlet end of the ignition device (53) is connected to a gas tank in the gas storage chamber (52).

21. The wood chip combustion furnace according to claim 20, wherein the second combustion chamber (51) is provided with a heat equalizing plate (54), and the heat equalizing plate (54) divides the combustion chamber of the second combustion chamber (51) to make the combustion chamber form a roasting space (50b) and the combustion space (50a).

22. The wood chip combustion furnace according to claim 21, wherein the heat equalizing plate (54) is made of ceramic material.

23. The wood chip combustion furnace according to claim 21, further comprising:
a second cover body (52) hinged to the second combustion chamber (51).

24. The wood chip combustion furnace according to claim 23, further comprising:
a side furnace cooker (56),
wherein the side furnace cooker (56) is provided in the roasting space (50b) in a liftable manner.

25. The wood chip combustion furnace according to claim 24, wherein:
the side furnace cooker (56) comprises a bearing part (561) and a support leg (562), the support leg (562) comprises a first support section (5621) and a second support section (5622), the first support section (5621) and the second support section (5622) are integrated, the first support section (5621) is connected to the bearing part (561), and a cross-sectional size of the first support section (5621) is larger than the cross-sectional size of the second support section (5622); and
the roasting space (50b) is provided with a first insertion hole (50b1) adapted to the first support section (5621) and a second insertion hole (50b2) adapted to the second support section (5622), and the first insertion hole (50b1) is provided close to the second insertion hole (50b2).

26. The wood chip combustion furnace according to claim 24, wherein the combustion space (50a) is provided with a diffusion screen (57), and the diffusion screen (57) is aligned with a gas outlet end of the ignition device (53).

27. The wood chip combustion furnace according to any one of claims 20 to 26, further comprising:
a heat preservation box (60) provided below the first furnace body (100).

28. The wood chip combustion furnace according to claim 27, wherein the heat preservation box (60) is provided with a plurality of heat preservation screens (61), and the plurality of heat preservation screens (61) are provided at intervals along a height direction of the heat preservation box (60).

29. The wood chip combustion furnace according to claim 28, wherein the heat preservation box (60) is provided with a heating tube (62), and the heating tube (62) is provided to avoid any of the heat preservation screens (61).
